Europäisches Patentamt

European Patent Office

Office européen des brevets

(19)

(11) Numéro de publication : **0 020 237**
**B1**

(12) **FASCICULE DE BREVET EUROPÉEN**

(45) Date de publication du fascicule du brevet :
01.06.83

(51) Int. Cl.³ : **C 09 D 5/24**, B 05 D 5/12,
H 05 F 3/02

(21) Numéro de dépôt : **80400699.7**

(22) Date de dépôt : **20.05.80**

(54) **Revêtements blancs conducteurs de l'électricité et leur application aux techniques spatiale et aéronautique.**

(30) Priorité : 30.05.79 FR 7913812

(43) Date de publication de la demande :
10.12.80 Bulletin 80/25

(45) Mention de la délivrance du brevet :
01.06.83 Bulletin 83/22

(84) Etats contractants désignés :
AT BE CH DE FR GB IT LI LU NL SE

(56) Documents cités :
FR A 1 516 639
US A 4 155 896

(73) Titulaire : **CENTRE NATIONAL D'ETUDES SPATIALES**
**129, Rue de l'Université**
**F-75007 Paris (FR)**

(72) Inventeur : **Guillaumon, Jean-Claude**
**Chemin de Pouze**
**F-31450 Ayguesvives (FR)**
Inventeur : **Blet, Louis Joseph Clément**
**11, Allée des Violettes**
**F-31520 Ramonville St Agne (FR)**

(74) Mandataire : **De Boisse, Louis**
**37, Avenue Franklin D. Roosevelt**
**F-75008 Paris (FR)**

EP 0 020 237 B1

Jouve, 18, rue St-Denis, 75001 Paris, France

Revêtements blancs conducteurs de l'électricité et leur application aux techniques spatiale et aéronautique

L'invention concerne des revêtements blancs conducteurs de l'électricité du type peintures.

On a besoin, en technique spatiale, de revêtements conducteurs de l'électricité possédant les propriétés suivantes :

$\alpha_s$ (absorptance solaire) $\leqslant$ 0,30 ;

$\varepsilon$ (facteur hémisphérique d'émission) $\geqslant$ 0,80.

Résistance de surface $R_S$ (mesurée sous un vide inférieur à $10^{-5}$ Torr) $\leqslant 10^9$ ohms/carré et satisfaisant, de plus, aux critères de dégazage-pollution, c'est-à-dire qu'un échantillon du revêtement porté à 125 °C sous un vide inférieur à $10^{-5}$ Torr pendant 24 heures, ne doit pas présenter une perte de poids supérieure à 1 % et que les produits condensables recueillis sur un disque maintenu à 25 °C ne doivent pas être supérieurs à 0,1 %.

De tels revêtements sont requis pour le contrôle thermique de certains satellites, notamment les satellites géostationnaires, et aussi pour éviter l'accumulation de charges électriques sur ces satellites par suite d'une irradiation d'électrons ou de protons. Les peintures blanches connues pour applications spatiales ne possèdent pas l'ensemble de ces propriétés car elles sont électriquement isolantes ($R_S$ de l'ordre de $10^{12}$ ohms/carré).

Les seuls revêtements connus qui répondent à l'ensemble de ces propriétés, mais qui ne sont pas des peintures, peuvent être classés dans les trois types suivants :

— tissus de quartz avec ou sans revêtement conducteur électrique (oxyde d'indium dopé) ;

— substrats de matière plastique métallisés sur leur face intérieure et revêtus d'une couche mince d'oxyde d'indium ou d'oxyde d'étain dopé sur leur face extérieure, dénommés SSM (second surface mirror) ;

— substrats en verre (par exemple au cérium) revêtus d'une couche d'oxyde d'indium ou d'oxyde d'étain dopé, dénommés OSR (optical surface reflector).

Ces revêtements ont l'inconvénient majeur d'être très onéreux car ils font appel à une technologie très compliquée.

Il serait donc avantageux de disposer de revêtements blancs conducteurs de l'électricité, du type peintures, qui soient faciles à réaliser et peu coûteux.

L'invention concerne un revêtement blanc conducteur de l'électricité du type peinture, qui présente une absorptance solaire $\alpha_S$ au plus égale à 0,30, un facteur hémisphérique d'émission $\varepsilon$ au moins égal à 0,80, une résistance de surface $R_S$ mesurée sous un vide inférieur à $10^{-5}$ Torr, au plus égale à $10^9$ ohms/carré, et satisfait aux critères de dégazage-pollution, caractérisé en ce qu'il comprend (a) une couche présentant une résistance de surface inférieure à 1 ohm/carré et une épaisseur d'au moins 15 micromètres, et (b) une couche blanche présentant une résistance de surface supérieure à $10^5$ ohms/carré et une épaisseur ne dépassant pas 100 micromètres, appliquée par dessus la couche (a).

Si désiré, le revêtement peut comprendre plus d'un couple de couches (a) et (b). Par exemple, le revêtement peut comprendre une première couche (a), une première couche (b), une seconde couche (a) et une seconde couche (b) appliquées successivement les unes sur les autres.

Egalement, de façon facultative, le revêtement de l'invention peut comprendre, en outre, une couche primaire d'accrochage appliquée directement sur le substrat avant application des couches (a) et (b), et/ou une couche de peinture blanche non conductrice de l'électricité appliquée, soit directement sur le substrat, soit sur la couche primaire si l'on en utilise une.

La couche (a) peut avoir diverses compositions ; elle peut être obtenue, par exemple, à partir :

— d'un liant minéral ou organique et d'un métal en poudre ou paillettes ;

— d'un liant minéral ou organique et d'un mélange de poudre ou paillette(s) métallique(s) et d'un pigment blanc faiblement conducteur de l'électricité ;

— d'une poudre ou de paillettes métallique(s) dispersée(s) dans un milieu approprié ;

— d'un mélange d'une poudre ou de paillettes métallique(s) et d'un pigment blanc semi-conducteur de l'électricité, dispersé dans un milieu approprié.

La couche (b) peut aussi avoir diverses compositions ; elle peut être obtenue, par exemple, à partir :

— d'un liant minéral ou organique et d'un pigment blanc semi-conducteur ;

— d'un liant minéral ou organique et d'un mélange de pigment blanc semi-conducteur et d'un pigment blanc non conducteur de l'électricité ;

— d'un pigment blanc semi-conducteur dispersé dans un milieu approprié ;

— d'un mélange de pigment blanc semi-conducteur et d'un pigment blanc non conducteur de l'électricité, dispersé dans un milieu approprié.

Comme poudres ou paillettes métalliques utilisables, on peut citer, à titre d'exemples, les poudres ou paillettes d'argent, de zinc, de cuivre, d'aluminium, de platine, de palladium, de magnésium, etc...

Comme liants organiques utilisables, on peut citer, à titre d'exemples, les silicones, les résines époxydes, les polyuréthanes, les résines acryliques, les résines glycérophtaliques, etc... A ce jour, on préfère utiliser les silicones pour les applications spatiales et les polyuréthanes pour les applications aéronautiques.

Comme liants minéraux utilisables, on peut citer, à titre d'exemples, des silicates comme les silicates de potassium, de sodium, de calcium, etc...

Comme pigments blancs semi-conducteurs utilisables, on peut citer, par exemple, l'oxyde d'étain non dopé (avec lacunes d'oxygène) ou dopé (au chlore, au fluor, à l'antimoine, à l'indium, au bismuth, etc...) et l'oxyde d'indium non dopé (avec lacunes d'oxygène) ou dopé (à l'étain, à l'antimoine, au bismuth, au titane, au plomb, etc...). Ces pigments semi-conducteurs sont bien connus dans la technique et sont disponibles dans le commerce à partir de divers fabricants (par exemple chez MERCK Co.).

Comme pigments blancs non conducteurs de l'électricité utilisables, on peut citer, par exemple, l'oxyde de zinc, le sulfate de baryum, l'orthotitanate de zinc, le bioxyde de titane, etc...

Le mélange poudre ou paillettes métallique(s)-pigment blanc semi-conducteur peut contenir 50 à 99 % en poids de poudre ou paillettes métallique(s) et 50 à 1 % en poids de pigment blanc semi-conducteur.

Le mélange pigment blanc semi-conducteur-pigment blanc non conducteur peut contenir, en poids, 50 à 99 % de pigment semi-conducteur et 50 à 1 % de pigment non conducteur.

L'application des diverses couches du revêtement de l'invention sur un substrat peut s'effectuer au pistolet à peinture, à la brosse ou par toute autre technique connue. Le revêtement de l'invention peut être appliqué sur toutes sortes de substrats tels que le verre et les métaux. Lorsqu'on utilise une composition sans liant pour constituer la couche (a), il est préféré d'appliquer cette composition sans liant sur une couche de peinture blanche de base qui n'est pas encore complètement sèche afin d'obtenir une meilleure adhérence de la poudre ou des paillettes métalliques. De même, lorsqu'on utilise une composition sans liant pour constituer la couche (b), il est préféré, mais non obligatoire, d'appliquer cette composition sur une couche (a) comprenant un liant qui n'est pas encore complètement sèche. Egalement, lorsqu'on emploie des compositions sans liant pour constituer les couches (a) et (b), il est préféré d'appliquer ces compositions à la suite l'une de l'autre sur une couche de peinture blanche de base qui n'est pas encore complètement sèche.

Outre son utilisation sur des satellites spatiaux, le revêtement de l'invention est utile, dans l'industrie aéronautique, pour l'application sur des avions en vue d'éviter l'accumulation d'électricité statique sur les parties non conductrices de l'électricité des avions.

Les exemples suivants sont donnés en vue d'illustrer l'invention.

Exemple 1

On obtient un revêtement blanc conducteur de l'électricité en appliquant sur un substrat en verre non conducteur de l'électricité les couches successives suivantes, les épaisseurs indiquées étant les épaisseurs des couches après séchage :
(1) couche de 10 microns d'épaisseur d'une composition primaire d'accrochage à base de résine époxyde et de chromate de strontium vendue sous la dénomination commerciale P 128 par la Société ASTRAL ;
(2) couche de 100 microns d'épaisseur d'une peinture blanche non conductrice de l'électricité (à base de ZnO et de résine de silicone RTV 121 produite par RHONE-POULENC), vendue sous la dénomination commerciale PSG 120 par la Société ASTRAL ;
(3) couche de 30 microns d'épaisseur obtenue à partir d'une dispersion de 50 g de paillettes d'argent dans 50 g de méthyléthylcétone (grosseur des paillettes : 50 à 100 microns) ;
(4) couche de 60 microns d'épaisseur obtenue à partir d'une dispersion de 20 g de pigment blanc d'oxyde d'étain dopé au fluor dans 50 g de méthyléthylcétone.

Les propriétés du revêtement obtenu sont les suivantes :

$\alpha_S = 0,25$
$\varepsilon = 0,85$
$R_S = 5$ ohms/carré.

Exemple 2

On obtient un revêtement blanc conducteur de l'électricité en appliquant sur un substrat en verre non conducteur de l'électricité, les couches successives suivantes, les épaisseurs indiquées étant les épaisseurs des couches après séchage :
(1) couche de 10 microns d'épaisseur de la composition primaire d'accrochage vendue sous la dénomination commerciale P 128 par la Société ASTRAL ;
(2) couche de 100 microns d'épaisseur de la peinture blanche non conductrice de l'électricité vendue sous la dénomination commerciale PSG 120 par la Société ASTRAL ;
(3) couche de 30 microns d'épaisseur obtenue à partir d'une dispersion comprenant 15 g de paillettes d'argent d'une grosseur de 50 à 100 microns, 10 g de résine de silicone RTV 121 (RHONE-POULENC) à titre de liant, et 20 cm³ de toluène ;
(4) couche de 60 microns d'épaisseur obtenue à partir d'une dispersion comprenant 20 g de poudre d'oxyde d'étain dopé au fluor, de 10 g de résine de silicone RTV 121 et 20 cm³ de toluène.

Les propriétés du revêtement obtenu sont les suivantes :

$\alpha_S = 0,30$
$\varepsilon = 0,81$
$R_S = 20$ ohms/carré.

Exemple 3

On obtient un revêtement blanc conducteur de l'électricité en appliquant sur un substrat en verre non conducteur de l'électricité les couches successives suivantes, les épaisseurs indiquées étant les épaisseurs des couches après séchage :
(1) couche de 10 microns d'épaisseur de la composition primaire d'accrochage vendue sous la dénomination commerciale P 128 par la Société ASTRAL ;
(2) couche conductrice de 30 microns d'épaisseur obtenue à partir d'une composition comprenant 12 g de résine de silicone RTV 121, 15 g de paillettes d'argent, 10 g d'oxyde d'étain dopé au fluor et 30 cm³ de toluène ;

(3) couche faiblement conductrice de l'électricité, de 60 microns d'épaisseur, obtenue à partir d'une composition comprenant 15 g de résine de silicone RTV 121, 20 g d'oxyde d'étain dopé au fluor, 10 g d'oxyde de zinc et 30 cm³ de toluène.

Les propriétés du revêtement sont les suivantes :

$\alpha_S$ = 0,30
$\varepsilon$ = 0,85
$R_S$ = 200 ohms/carré.

Exemple 4

On obtient un revêtement blanc conducteur de l'électricité en appliquant sur un substrat métallique (alliage d'aluminium AU 4 G) les couches successives suivantes, les épaisseurs indiquées étant les épaisseurs des couches après séchage :

(1) couche de 10 microns d'épaisseur de la composition primaire d'accrochage P 128 de la Société ASTRAL ;

(2) couche conductrice identique à la couche (2) de l'exemple 3 ;

(3) couche blanche faiblement conductrice de l'électricité, de 60 microns d'épaisseur, obtenue à partir d'une composition comprenant 10 g de résine de silicone RTV 121, 25 g d'oxyde d'étain dopé au fluor et 30 cm³ de toluène.

$\alpha_S$ = 0,30
$\varepsilon$ = 0,83
$R_S$ = $4 \times 10^6$ ohms/carré.

Exemple 5

On obtient un revêtement blanc conducteur de l'électricité en appliquant sur un substrat métallique (alliage d'aluminium AG 5) les couches successives suivantes, les épaisseurs indiquées étant les épaisseurs des couches après séchage :

(1) couche de 10 microns d'épaisseur de la composition primaire d'accrochage P 128 de la Société ASTRAL ;

(2) couche conductrice identique à la couche (2) de l'exemple 3 ;

(3) couche blanche faiblement conductrice de l'électricité, d'une épaisseur de 60 microns, obtenue à partir d'une composition contenant 15 g de RTV 121, 21 g d'oxyde d'étain dopé au fluor, 14 g d'oxyde de zinc et 30 cm³ de toluène.

Les propriétés du revêtement sont les suivantes :

$\alpha_S$ = 0,24
$\varepsilon$ = 0,85
$R_S$ = $2 \times 10^7$ ohms/carré.

**Revendications**

1. Revêtement blanc conducteur de l'électricité du type peinture, qui présente une absorptance solaire $\alpha_S$ au plus égale à 0,30, un facteur hémisphérique d'émission $\varepsilon$ au moins égal à 0,80, une résistance de surface $R_S$, mesurée sous un vide inférieur à $10^{-5}$ Torr, au plus égale à $10^9$ ohms/carré, et satisfait aux critères de dégazage-pollution, caractérisé en ce qu'il comprend (a) une couche présentant une résistance de surface inférieure à 1 ohm/carré et une épaisseur d'au moins 15 micromètres, et (b) une couche blanche présentant une résistance de surface supérieure à $10^5$ ohms/carré et une épaisseur ne dépassant pas 100 micromètres, appliquée par dessus la couche (a).

2. Revêtement selon la revendication 1, caractérisé en ce qu'il comprend plus d'un couple de couches (a) et (b).

3. Revêtement selon la revendication 1 ou 2, caractérisé en ce qu'il comprend, en outre, une couche primaire d'accrochage appliquée sur le substrat avant application des couches (a) et (b).

4. Revêtement selon l'une quelconque des revendications 1 à 3, caractérisé en ce qu'il comprend, en outre, une couche de peinture blanche non conductrice de l'électricité appliquée sous la couche (a).

5. Revêtement selon la revendication 1, caractérisé en ce que sa résistance de surface $R_S$ ne dépasse pas 200 ohms/carré.

6. Revêtement selon l'une quelconque des revendications 1 à 5, caractérisé en ce que la couche (a) contient une poudre métallique ou des paillettes métalliques.

7. Revêtement selon l'une quelconque des revendications 1 à 6, caractérisé en ce que la couche (b) contient un pigment blanc semi-conducteur de l'électricité.

8. Revêtement selon la revendication 7, caractérisé en ce que la couche (B) contient, en outre, un pigment blanc non conducteur de l'électricité.

9. Revêtement selon la revendication 7, caractérisé en ce que le pigment blanc semi-conducteur est choisi parmi l'oxyde d'étain dopé, l'oxyde d'étain non dopé avec lacunes d'oxygène, l'oxyde d'indium dopé et l'oxyde d'indium non dopé avec lacunes d'oxygène.

10. Utilisation d'un revêtement tel que défini à l'une quelconque des revendications 1 à 9 pour le contrôle thermique d'un satellite spatial ou pour l'élimination de l'électricité statique sur les parties non conductrices de l'électricité d'un avion.

**Claims**

1. An electrically conductive white coating of the paint-type, which presents a solar absorption $\alpha_S$ at most equal to 0.30, a hemispherical emission factor $\varepsilon$ at least equal to 0.80, a surface resistance $R_S$, measured in a vacuum lower than $10^{-5}$ Torr, at most equal to $10^9$ ohms/square, and meets the degasification-pollution requirements, characterized in that it comprises (a) a layer having a surface resistance lower than 1 ohm/square and a thickness of at least 15 μm, and (b) a white layer having a surface resistance higher than $10^5$ ohms/square and a thickness not

greater than 100 μm, applied on the top of layer (a).

2. A coating according to claim 1, characterized in that it comprises more than a pair of layers (a) and (b).

3. A coating according to claim 1 or 2, characterized in that it comprises, in addition, a primary anchoring layer applied to the substrate prior to application of layers (a) and (b).

4. A coating according to any of claims 1 to 3, characterized in that it comprises, in addition, a layer of white paint, which is substantially electrically non-conductive, applied underneath layer (a).

5. A coating according to claim 1, characterized in that it has a surface resistance $R_s$ not higher than 200 ohms/square.

6. A coating according to any of claims 1 to 5, characterized in that the layer (a) contains a metallic powder or metallic flakes.

7. A coating according to any of claims 1 to 6, characterized in that the layer (b) contains an electrically semi-conductive white pigment.

8. A coating according to claim 7, characterized in that the layer (b) contains, in addition, an electrically non-conductive white pigment.

9. A coating according to claim 7, characterized in that the semi-conductive white pigment is selected among doped tin oxide, non-doped tin oxide with oxygen vacancies, doped indium oxide, and non-doped indium oxide with oxygen vacancies.

10. The use of a coating such as defined in any of claims 1 to 9 for the thermal control of a space satellite or for the removal of static electricity on the electrically non-conductive parts of an aeroplane.

## Ansprüche

1. Elektrisch leitendes weißes Überzugsmittel nach Art einer Farbe, welches ein Sonnenabsorptionsvermögen $\alpha_s$ von höchstens gleich 0,3, einen hemisphärischen Emissionsfaktor $\varepsilon$ von wenigstens 0,8 und einen Oberflächenwiderstand $R_s$ von höchstens $10^9$ Ohm/Quadrat gemessen bei einem Vakuum von kleiner als $10^{-5}$ Torr aufweist und welches den Kriterien Entgasung/Verunreinigungen genügt, dadurch gekennzeichnet, daß es aufweist : (a) eine erste Schicht, welche einen Oberflächenwiderstand von weniger als 10 Ohm/Quadrat und eine Dicke von mindestens 15 μ aufweist, und (b) eine auf die erste Schicht aufgebrachte weiße Schicht mit einem Oberflächenwiderstand von mehr als $10^5$ Ohm/Quadrat und einer Dicke von nicht mehr als 100 μ.

2. Überzugsmittel nach Anspruch 1, dadurch gekennzeichnet, daß es mehr als zwei der Schichten (a) und (b) aufweist.

3. Überzugsmittel nach Anspruch 1 oder 2, dadurch gekennzeichnet, daß es zusätzlich eine primäre Haftschicht aufweist, welche auf das Substrat vor Aufbringung der Schichten (a) und (b) aufgetragen ist.

4. Überzugsmittel nach einem der Ansprüche 1 bis 3, dadurch gekennzeichnet, daß es zusätzlich eine weiße Farbschicht aufweist, welche elektrisch nicht leitend ist und auf die Schicht (a) aufgebracht ist.

5. Überzugsmittel nach Anspruch 1, dadurch gekennzeichnet, daß sein Oberflächenwiderstand $R_s$ 200 Ohm/Quadrat nicht überschreitet.

6. Überzugsmittel nach einem der Ansprüche 1 bis 5, dadurch gekennzeichnet, daß die Schicht (a) ein Metallpulver oder Metallflitter enthält.

7. Überzugsmittel nach einem der Ansprüche 1 bis 6, dadurch gekennzeichnet, daß die Schicht (b) ein elektrisch halbleitendes weißes Pigment enthält.

8. Überzugsmittel nach Anspruch 7, dadurch gekennzeichnet, daß die Schicht (b) zusätzlich ein elektrisch nicht leitendes weißes Pigment enthält.

9. Überzugsmittel nach Anspruch 7, dadurch gekennzeichnet, daß das elektrisch halbleitende weiße Pigment aus der nachstehenden Gruppe ausgewählt ist : dotiertes Zinnoxid, nichtdotiertes Zinnoxid mit Sauerstoffehlstellen, dotiertes Indiumoxid und nichtdotiertes Indiumoxid mit Sauerstofffehlstellen.

10. Verwendung eines Überzugsmittels nach einem der Ansprüche 1 bis 9 zur thermischen Steuerung eines Weltraumsatelliten oder zur Verhinderung des Aufbaus elektrostatischer Ladungen auf den elektrisch nicht leitenden Teilen eines Flugzeuges.